# EUROPEAN PATENT APPLICATION

(11) **EP 4 618 685 A1**
(43) Date of publication of application: **17.09.2025**
(21) Application number: 25161870.8
(22) Date of filing: 05.03.2025
(51) Int. Cl.: H04W 76/15

(54) **MULTI ACCESS POINT CO-ORDINATION**

(30) Priority: 13.03.2024 GB 202403616
(71) Applicant: Nokia Technologies Oy, 02610 Espoo (FI)
(72) Inventor: WILHELMI, Francisco, Gerlingen (DE); GALATI GIORDANO, Lorenzo, Stuttgart (DE); FONTANESI, Gianluca Attilio, Stuttgart (DE)
(74) Representative: Whiting, Gary

(57) **Abstract**

An apparatus, method and computer program is described comprising receiving, at a first node of a wireless communication network, MAPC parameter set data from one or more other nodes of the wireless communication network, wherein each MAPC parameter set data comprises MAPC capabilities information identifying one or more MAPC features supported by the respective other node and details of supported functionality for each identified supported MAPC feature; exchanging information for establishing or modifying an MAPC group with one or more of said other nodes, said MAPC group usable for defining co-ordination between nodes of the MAPC group; and executing one or more features defined by one or more management frames received from one or more of said other nodes in accordance with the defined co-ordination.

## Description

### Field

Example embodiments relate to multi-access point co-ordination (MAPC), in particular to systems, methods and/or computer programs for defining and using multi-access point co-ordination parameters.

### Background

Different types of multi-access point co-ordination (MAPC) are envisaged, for example, for use in Wi-Fi networks.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising: means for receiving, at a first node of a wireless communication network (e.g., a Wi-Fi network), Multi Access Point Co-ordination, MAPC, parameter set data from one or more other nodes of the wireless communication network (e.g., from each of the other nodes of the network), wherein each MAPC parameter set data comprises MAPC capabilities information identifying one or more MAPC features supported by the respective other node and details of supported functionality for each identified supported MAPC feature; means for providing MAPC parameter set data for the first node to one or more of said other nodes of the wireless communication network; means for exchanging (e.g., using direct and/or relayed messages) information for establishing or modifying (e.g., updating or terminating) an MAPC group with one or more of said other nodes, said MAPC group usable for defining co-ordination between nodes of the MAPC group; and means for executing one or more features defined by one or more management frames received from one or more of said other nodes in accordance with the defined co-ordination. The apparatus may be said first node. Alternatively, the said apparatus may form part of said first node or may be accessible to the first node (e.g., provided remote from said first node).

The means for receiving said MAPC parameter set data may comprise means for receiving data broadcast by one of more of said nodes.

The means for providing said MAPC parameter set data of the first node may comprise means for broadcasting said data.

Some example embodiments further comprise: means for sending (e.g., broadcasting) a request (e.g., a probe request) to a node (e.g., a node identified in the request) of the wireless communication network requesting co-ordination information from a node of the wireless communication network; and means for receiving a response from said node in response to said request for co-ordination information, wherein said response includes MAPC parameter set data for the respective node. The response may be a probe response. The probe response may be a directed message (e.g., whose destination address is set to the ID of the device sending/broadcasting a probe request that the probe response is responding to).

Some example embodiments further comprise: means for receiving a request from one of said nodes to provide co-ordination information to said node; and means for sending a response to said request to said node, wherein said response includes the MAPC parameter set data for the first node.

The MAPC parameter set data may be received or provided (e.g., exchanged) as part of beacon frame exchanged between respective nodes. The MAPC parameter set data may be received or provided (e.g., exchanged) as part of probe response message exchanged between respective nodes.

The means for exchanging information for establishing or modifying an MAPC group with one or more of said other nodes may comprise: means for sending an authentication request from the first node to one of said other nodes requesting authentication by said other node; and means for receiving an authentication response from said other node in response to said authentication request, wherein the authentication response is used to establish a trusted setting between at least some of said nodes of the MAPC group, including the first node. The said authentication may be performed by an identified leader node of said MAPC group.

The means for exchanging information for establishing or modifying an MAPC group with one or more of said other nodes may comprise: means for receiving, at the first node, an authentication request from one of said other nodes requesting authentication by said first node; and means for providing an authentication response in response to said authentication request, wherein said response is used to establish a trusted setting between at least some of said nodes of the MAPC group, including the first node and said other node. The said authentication may be performed by an identified leader node of said MAPC group.

The means for exchanging information for establishing or modifying an MAPC group with one or more of said other nodes may comprise: means for sending an association request to a node of the wireless communication network requesting addition of a new node to the MAPC group, said request including agreed co-ordination capabilities for the new node; and means for receiving an association response from said node in response to said authentication request, wherein said response includes said agreed capabilities for the new node.

The means for exchanging information for establishing or modifying an MAPC group with one or more of said other nodes may comprise: means for receiving, at the first node, an association request requesting addition of a new node to the MAPC group, said request including agreed co-ordination capabilities for new node; and means for providing an association response in response to said authentication request, wherein said response includes said agreed capabilities for the new node.

Some example embodiments further comprise: means for exchanging one or more MAPC management frames between at least two nodes of the MAPC group, wherein the or each MAPC management frame comprises MAPC headers and one or more information elements defining features to be executed by the MAPC group.

Some example embodiments further comprise means for modifying the co-ordination between nodes of said group in response to a MAPC management frame. The means for modifying the co-ordination between nodes of said group may comprise: means for exchanging a management frame between at least two nodes of the MAPC group instructing a removal of an identified node from the MAPC group. Example management frames include a deauthentication management frame or a disassociation management frame. Such management frames may be exchanged directly or using relay messages. The management frame instructing removal of the identified node may comprise a reason code providing a reason for the removal and an identifier identifying the MAPC group.

Each of said nodes may, for example, be an Access Point Multi-Link Device (AP-MLD).

According to a second aspect, there is described a method comprising: receiving, at a first node of a wireless communication network (e.g., a Wi-Fi network), Multi Access Point Co-ordination (MAPC) parameter set data from one or more other nodes of the wireless communication network (e.g., from each of the other nodes of the network), wherein each MAPC parameter set data comprises MAPC capabilities information identifying one or more MAPC features supported by the respective other node and details of supported functionality for each identified supported MAPC feature; exchanging (e.g., using direct and/or relayed messages) information for establishing or modifying (e.g., updating or termination) an MAPC group with one or more of said other nodes, said MAPC group usable for defining co-ordination between nodes of the MAPC group; and executing one or more features defined by one or more management frames received from one or more of said other nodes in accordance with the defined co-ordination.

Receiving said MAPC parameter set data may comprise receiving data broadcast by one of more of said nodes.

The method may further comprise providing MAPC parameter set data of the first node (e.g., by broadcasting said data).

Some example embodiments further comprise: sending (e.g., broadcasting) a request to a node (e.g., a node identified in the request) of the wireless communication network requesting co-ordination information from a node of the wireless communication network; and receiving a response from said node in response to said request for co-ordination information, wherein said response includes MAPC parameter set data for the respective node. The response may be a probe response. The probe response may be a directed message (e.g., whose destination address is set to the ID of the device sending/broadcasting a probe request that the probe response is responding to).

The MAPC parameter set data may be received or provided (e.g., exchanged) as part of beacon frame or a probe response message exchanged between respective nodes.

Exchanging information for establishing or modifying an MAPC group with one or more of said other nodes may comprise: sending an authentication request from the first node to one of said other nodes requesting authentication by said other node; and receiving an authentication response from said other node in response to said authentication request, wherein the authentication response is used to establish a trusted setting between at least some of said nodes of the MAPC group, including the first node. The said authentication may be performed by an identified leader node of said MAPC group.

Exchanging information for establishing or modifying an MAPC group with one or more of said other nodes may comprise: receiving, at the first node, an authentication request from one of said other nodes requesting authentication by said first node; and providing an authentication response in response to said authentication request, wherein said response is used to establish a trusted setting between at least some of said nodes of the MAPC group, including the first node and said other node. The said authentication may be performed by an identified leader node of said MAPC group.

Exchanging information for establishing or modifying an MAPC group with one or more of said other nodes may comprise: sending an association request to a node of the wireless communication network requesting addition of a new node to the MAPC group, said request including agreed co-ordination capabilities for the new node; and receiving an association response from said node in response to said authentication request, wherein said response includes said agreed capabilities for the new node.

Exchanging information for establishing or modifying an MAPC group with one or more of said other nodes may comprise: receiving, at the first node, an association request requesting addition of a new node to the MAPC group, said request including agreed co-ordination capabilities for new node; and providing an association response in response to said authentication request, wherein said response includes said agreed capabilities for the new node.

Some example embodiments further comprise: exchanging one or more MAPC management frames between at least two nodes of the MAPC group, wherein the or each MAPC management frame comprises MAPC headers and one or more information elements defining features to be executed by the MAPC group.

Some example embodiments further comprise modifying the co-ordination between nodes of said group in response to a MAPC management frame. Modifying the co-ordination between nodes of said group may comprise: exchanging a management frame between at least two nodes of the MAPC group instructing a removal of an identified node from the MAPC group. Example management frames include a deauthentication management frame or a disassociation management frame. Such management frames may be exchanged directly or using relay messages. The management frame instructing removal of the identified node may comprise a reason code providing a reason for the removal and an identifier identifying the MAPC group.

According to a third aspect, there is described a method comprising: providing MAPC parameter set data for a first node to one or more of other nodes of the wireless communication network (e.g., a Wi-Fi network); exchanging information (e.g. using direct and/or relayed messages) for establishing or modifying an MAPC group with one or more of said other nodes, said MAPC group usable for defining co-ordination between nodes of the MAPC group, including the first node; and executing one or more features defined by one or more management frames received from one or more of said other nodes in accordance with the defined co-ordination.

Providing said MAPC parameter set data of the first node may comprise broadcasting said data.

Some example embodiments further comprise: receiving a request from one of said nodes to provide co-ordination information to said node; and sending a response to said request to said node, wherein said response includes the MAPC parameter set data for the first node.

The MAPC parameter set data may be received or provided (e.g., exchanged) as part of beacon frame or a probe response message exchanged between respective nodes.

Exchanging information for establishing or modifying an MAPC group with one or more of said other nodes may comprise: sending an authentication request from the first node to one of said other nodes requesting authentication by said other node; and receiving an authentication response from said other node in response to said authentication request, wherein the authentication response is used to establish a trusted setting between at least some of said nodes of the MAPC group, including the first node. The said authentication may be performed by an identified leader node of said MAPC group.

Exchanging information for establishing or modifying an MAPC group with one or more of said other nodes may comprise: receiving, at the first node, an authentication request from one of said other nodes requesting authentication by said first node; and providing an authentication response in response to said authentication request, wherein said response is used to establish a trusted setting between at least some of said nodes of the MAPC group, including the first node and said other node. The said authentication may be performed by an identified leader node of said MAPC group.

Exchanging information for establishing or modifying an MAPC group with one or more of said other nodes may comprise: sending an association request to a node of the wireless communication network requesting addition of a new node to the MAPC group, said request including agreed co-ordination capabilities for the new node; and receiving an association response from said node in response to said authentication request, wherein said response includes said agreed capabilities for the new node.

Exchanging information for establishing or modifying an MAPC group with one or more of said other nodes may comprise: receiving, at the first node, an association request requesting addition of a new node to the MAPC group, said request including agreed co-ordination capabilities for new node; and providing an association response in response to said authentication request, wherein said response includes said agreed capabilities for the new node.

Some example embodiments further comprise: exchanging one or more MAPC management frames between at least two nodes of the MAPC group, wherein the or each MAPC management frame comprises MAPC headers and one or more information elements defining features to be executed by the MAPC group.

Some example embodiments further comprise modifying the co-ordination between nodes of said group in response to a MAPC management frame. Modifying the co-ordination between nodes of said group may comprise: exchanging a management frame between at least two nodes of the MAPC group instructing a removal of an identified node from the MAPC group. Example management frames include a deauthentication management frame or a disassociation management frame. Such management frames may be exchanged directly or using relay messages. The management frame instructing removal of the identified node may comprise a reason code providing a reason for the removal and an identifier identifying the MAPC group.

According to a fourth aspect, there is provided a computer-readable instructions which, when executed by a computing apparatus, cause the computing apparatus to perform (at least) any method as described herein (including the methods of the second and third aspects described above).

According to a fifth aspect, there is provided a computer-readable medium (such as a non-transitory computer-readable medium) comprising program instructions stored thereon for performing (at least) any method as described herein (including the methods of the second and third aspects described above).

According to a sixth aspect, there is provided an apparatus comprising: at least one processor; and at least one memory storing instructions that, when executed by the at least one processor, causes the apparatus to perform (at least) any method as described herein (including the methods of the second and third aspects described above).

According to a seventh aspect, there is provided a computer program comprising instructions which, when executed by an apparatus, cause the apparatus to perform at least the following: receive, at a first node of a wireless communication network, Multi Access Point Co-ordination (MAPC) parameter set data from one or more other nodes of the wireless communication network, wherein each MAPC parameter set data comprises MAPC capabilities information identifying one or more MAPC features supported by the respective other node and details of supported functionality for each identified supported MAPC feature; exchange information for establishing or modifying an MAPC group with one or more of said other nodes, said MAPC group usable for defining co-ordination between nodes of the MAPC group; and execute one or more features defined by one or more management frames received from one or more of said other nodes in accordance with the defined co-ordination.

According to an eighth aspect, there is provided a computer program comprising instructions which, when executed by an apparatus, cause the apparatus to perform at least the following: provide MAPC parameter set data for a first node to one or more of other nodes of the wireless communication network; exchange information for establishing or modifying an MAPC group with one or more of said other nodes, said MAPC group usable for defining co-ordination between nodes of the MAPC group, including the first node; and execute one or more features defined by one or more management frames received from one or more of said other nodes in accordance with the defined co-ordination.

According to a ninth aspect, there is provided an apparatus comprising: an input (or some other means) of a first node of a wireless communication network (e.g. a Wi-Fi network) for receiving Multi Access Point Co-ordination (MAPC) parameter set data from one or more other nodes of the wireless communication network, wherein each MAPC parameter set data comprises MAPC capabilities information identifying one or more MAPC features supported by the respective other node and details of supported functionality for each identified supported MAPC feature; a control module (or some other means) for exchanging information for establishing or modifying an MAPC group with one or more of said other nodes, said MAPC group usable for defining co-ordination between nodes of the MAPC group; and a processor (or some other means) for executing one or more features defined by one or more management frames received from one or more of said other nodes in accordance with the defined co-ordination.

According to a tenth aspect, there is provided an apparatus comprising: an output (or some other means) of a node of a wireless communication network for providing MAPC parameter set data for a first node to one or more of other nodes of the wireless communication network; a control module (or some other means) for exchanging information for establishing or modifying an MAPC group with one or more of said other nodes, said MAPC group usable for defining co-ordination between nodes of the MAPC group, including the first node; and a processor (or some other means) for executing one or more features defined by one or more management frames received from one or more of said other nodes in accordance with the defined co-ordination.

### Brief Description of the Drawings

Example embodiments will now be described by way of non-limiting examples, with reference to the accompanying drawings, in which:
FIG. 1 is a block diagram of a wireless communication network in accordance with an example embodiment;
FIG. 2 is a block diagram of a wireless communication network in accordance with an example embodiment;
FIG. 3 is a flow chart showing a method in accordance with an example embodiment;
FIG. 4 is a message flow diagram in accordance with an example embodiment;
FIG. 5 is a block diagram showing a message format in accordance with an example embodiment;
FIG. 6 is a block diagram showing a message format in accordance with an example embodiment;
FIGS. 7 to 9 are message flow diagrams in accordance with example embodiments;
FIGS. 10 to 14 are block diagrams showing message formats in accordance with example embodiments;
FIG. 15 is a flow chart showing a method in accordance with an example embodiment;
FIG. 16 is a flow chart showing a method in accordance with an example embodiment;
FIG. 17 is a block diagram of components of a system in accordance with an example embodiment; and
FIG. 18 shows an example of tangible media for storing computer-readable code which when run by a computer may perform methods according to example embodiments described above.

### Detailed Description

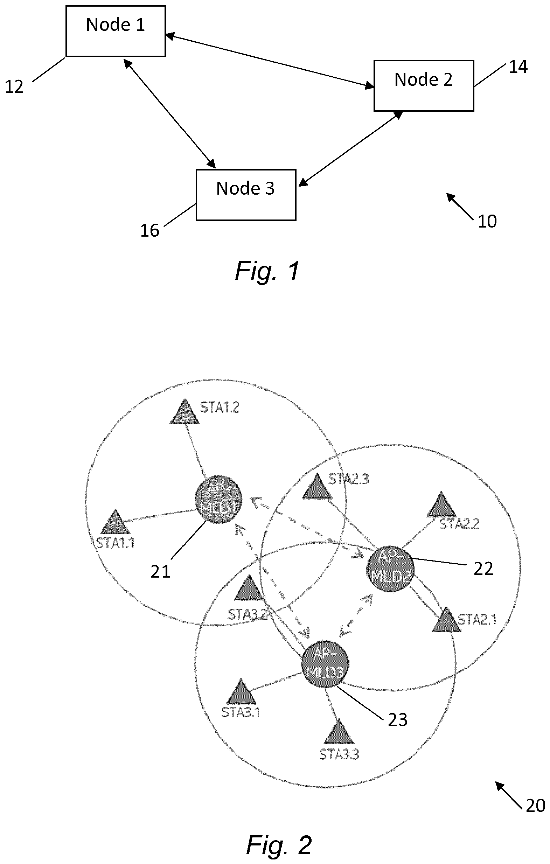

FIG. 1 is a block diagram of a wireless communication network, indicated generally by the reference numeral 10, in accordance with an example embodiment.

The network 10 comprises a first node 12, a second node 14 and a third node 16. Each of the nodes is in two-way communication with some or all of the other nodes of the network. The network 10 may, for example, be a Wi-Fi network.

The nodes of the network 10 may be configured to share Multi-Access Point Coordination (MAPC) information. Such information (which may be in accordance with IEEE 802.11 Wi-Fi standards) may be used to enable some or all of the nodes 12, 14, 16 to share co-ordination information, thereby improving management and organization of the network 10.

Co-ordination parameters may be shared between at least some of the nodes of the network 10 in advance of transmissions being sent. In this way, parameters can be leveraged to seek to optimize coordination needs based, for example, on the capabilities and requirements of each node.

To support different types of MAPC coordination features that may be implemented, a flexible MAPC framework may be provided, as discussed in detail below. For example, such a framework may enable the establishment and execution of a set of coordinated features.

FIG. 2 is a block diagram of a wireless communication network, indicated generally by the reference numeral 20, in accordance with an example embodiment. The network 20 is an example implementation of the network 10 described above and may, for example, be a Wi-Fi network.

The network 20 comprises a first Access Point Multi-link device (AP-MLD) 21, a second AP-MLD 22 and a third AP-MLD 23. Each of the AP-MLDs (and typically other AP-MLDs) coexist within the same physical area and can communicate with each other. Note that some communications between AP-MLDs may involve one or more relay nodes, such as one or more other AP-MLDs and/or one or more devices (e.g., stations (STAs)); this may occur, for example, if direct communication between a pair of AP-MLDs is not possible.

Each of the AP-MLDs 21 to 23 is in communication with one or more devices (e.g., stations (STAs)). For example, in the system 20, a first device STA 1.1 and a second device STA 1.2 are each in two-way communication with the first AP-MLD 21. Similarly, a third device STA 2.1, a fourth device STA 2.2, and a fifth device STA 2.3 are each in two-way communication with the second AP-MLD 22. Finally, a sixth device STA 3.1, a seventh device STA 3.2 and an eighth device STA 3.3 are each in two-way communication with the third AP-MLD 23. The various devices (STAs) may, for example, be user devices (e.g., UEs), laptops, or some other computing or communication device.

Using coordination signaling, the AP-MLDs 21-23 can establish coordination sets and enforce new policies leveraging different types of coordination.

To enable the coordination among AP-MLDs, the following procedures may be defined:
- Announcement/Discovery of AP-MLD coordination capabilities.
- MAPC group negotiation and establishment. Negotiation may occur between pairs of nodes or using a leader node.
- MAPC feature-specific negotiation and information exchange.
- MAPC changes management and finalization. This may, for example, include a node termination procedure.

Each procedure is discussed in detail below.

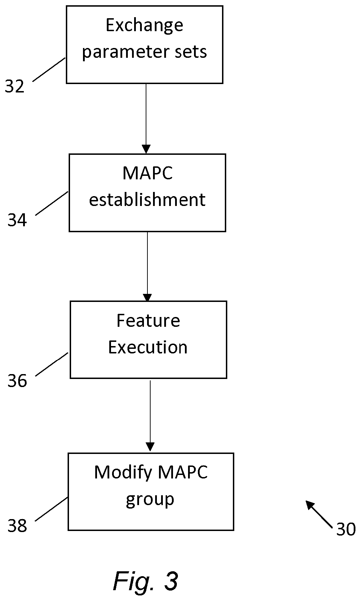

FIG. 3 is a flow chart showing a method, indicated generally by the reference numeral 30, in accordance with an example embodiment. The method 30 may be implemented at the nodes of the system 10 or at the nodes/AP-MLDs of the system 20. By way of example, the description below describes the method 30 being implemented at the first AP-MLD 21 of the system 20.

The method 30 starts at operation 32, where the first AP-MLD 21 of the wireless communication network 20 receives Multi Access Point Co-ordination, MAPC, parameter set data from one or more (e.g., all) other nodes of the network (e.g., the second AP-MLD 22 and the third AP-MLD 23); for example, the first AP-MLD 21 may exchange MAPC parameter set data with other node(s). Each MAPC parameter set data comprises MAPC capabilities information identifying one or more MAPC features supported by the respective other node and details of supported functionality for each identified supported MAPC feature. Although not shown in the method 30, the second AP-MLD 22 and/or the third AP-MLD 23 may receive MAPC parameter set from one or more (e.g., all) other nodes of the network. The operation 32 can therefore be used to implement the "Announcement/Discovery of AP-MLD coordination capabilities" referred to above.

As discussed in detail below, the operation 32 may include requesting MAPC information using broadcast messages (e.g., to scan whether there are MAPC-capable devices in the vicinity). Such broadcast message may be in the form of Probe Requests.

As part of the operation 32, the first AP-MLD 21 may provide MAPC parameter set data for the first node to one or more of said other nodes of the wireless communication network (e.g., to the second AP-MLD 22 and/or the third AP-MLD 23). Similarly, the second AP-MLD 22 and/or the third AP-MLD 23 may provide MAPC parameter set data to other node(s). In this way, MAPC parameter set data may be exchanged between nodes.

At operation 34, information for establishing or modifying (e.g., updating or terminating) an MAPC group is exchanged between the first node/ AP-MLD 21 and one or more of said other nodes (e.g., the second AP-MLD 22 and/or the third AP-MLD 23). The MAPC group may be usable for defining co-ordination between nodes of the MAPC group. As discussed in detail below, said information is exchanged using one or more frames (e.g., management frames). The establishment and negotiation of MAPC groups (see step 34 of the method 30) may be achieved through direct or relayed messages (e.g., management frames) between nodes (e.g., between AP-MLDs). Such messages may enable inter-BSS AP-MLD and Non-AP-MLD communication for coordination ends.

At operation 36, one or more features defined by one or more management frames received from one or more of said other nodes are executed (e.g., by the first node 21) in accordance with the defined co-ordination.

Finally, at operation 38, one more of MAPC groups are modified (e.g., changed, extended or terminated), as discussed in detail below.

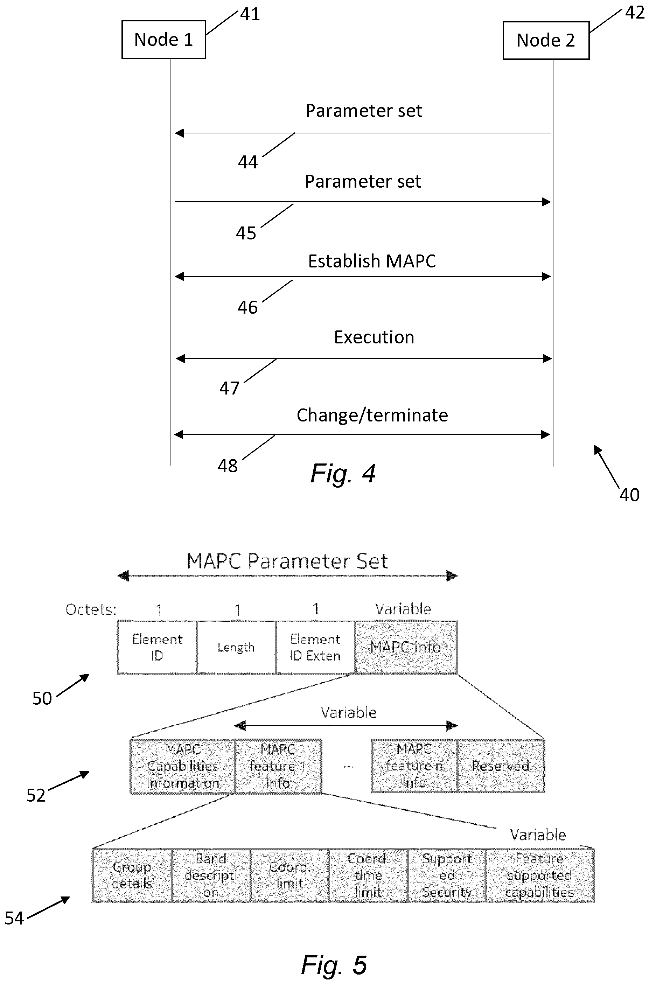

FIG. 4 is a message flow diagram, indicated generally by the reference numeral 40, in accordance with an example embodiment. The message flow diagram 40 shows message transferred between a first node 41 and a second node 42 of a wireless communication network, such as a Wi-Fi network. The first node 41 may, for example, be the first node 12 or the first AP-MLD 21 described above (or some similar node). The second node 42 may, for example, be the second node 14 or the second AP-MLD 22 described above (or some similar node).

The sequence 40 starts with Multi Access Point Co-ordination, MAPC, parameter set data being sent from the second node 42 to the first node 41 in message 44. As discussed above with reference to the operation 32 of the method 30, such MAPC parameter set data may be received, at the first node 41, from each of a plurality of other nodes of the wireless communication network. The MAPC parameter set data received in the message 44 comprises MAPC capabilities information identifying one or more MAPC features supported by the respective other node and details of supported functionality for each identified supported MAPC feature.

The first node 41 sends a message 45 providing MAPC parameter set data for the first node to the second node 42 (and possibly to one or more other nodes of the wireless communication network).

The messages 44 and 45 are therefore an example implementation of the operation 32 of the method 30 described above in which MAPC parameter set data is exchanged between nodes. It should be noted that the messages 44 and 45 need not be sent sequentially as shown in the message sequence 40.

In message 46 information is exchanged between the first and second nodes for establishing or modifying (e.g., updating or terminating) an MAPC group. Although a single double-headed arrow is shown, the message 46 may be implemented with multiple messages being exchanged. Note, of course, that the MAPC group may involve other nodes and the messages 46 exchanged between the first and second nodes (or similar such messages) may also be exchanged with the other nodes of the MAPC group. The information exchanged in the message 46 are usable for defining co-ordination between nodes of the MAPC group. The message 46 is an example implementation of the operation 34 described above. As discussed in detail below, the information exchanged in the message 46 may be exchanged using one or more frames (e.g., management frames).

In message 47, information is exchanged between the first and second nodes for executing one or more features defined by one or more management frames received from one or more of said other nodes in accordance with the defined co-ordination. The message 47 is an example implementation of the operation 36 described above. As discussed in detail below, the information exchanged in the message 47 may be exchanged using one or more frames (e.g., management frames).

In message 48, information is exchanged between the first and second nodes for changing, updating or terminating one or more nodes as defined by one or more management frames received from one or more of said other nodes in accordance with the defined co-ordination. The message 48 is an example implementation of the operation 38 described above. As discussed in detail below, the information exchanged in the message 48 may be exchanged using one or more frames (e.g., management frames).

Various messages exchanges in the message sequence 40 (or a similar message sequence) may take the form of MAPC management frames exchanges between at least two nodes of an MAPC group. The MAPC management frame may comprise MAPC headers and one or more information elements defining features to be executed by the MAPC group. For example, co-ordination between nodes of said group may be modified in response to a MAPC management frame. The frames (e.g., management frames) exchanged may have the same form, with parameters of the frames being changed to indicate the type of frame.

The message sequence 40 is provided by way of example only. The sequence of messages exchanged may be different in some example embodiments. For example, some steps may be repeated or interleaved with other steps.

FIG. 5 is a block diagram showing a message format, indicated generally by the reference numeral 50, in accordance with an example embodiment. The message format 50 is an MAPC parameter set. The messages 44 and 45 described above may be implemented using the MAPC parameter set 50.

The MAPC parameter set 50 comprises an element ID (e.g., an octet of data), length data (e.g., an octet of data), element ID extension data (e.g., an octet of data) and MAPC information 52 of variable length. In this way, MAPC information 52 is embedded into the MAPC Parameter Set. The MAPC parameter set message element can be optional if MAPC is implemented (otherwise, it is not present), thus ensuring backward compatibility with older Wi-Fi protocol generations.

The MAPC information portion 52 of the MAPC Parameter Set 50 includes the following fields:
o MAPC Capabilities Information: This field contains the set of supported MAPC features (e.g., C-SR, C-BF, C-OFDMA, and others).
∘ MAPC feature details 54. For each implemented/enabled MAPC feature, specific details are provided to indicate supported functionalities (a number of such MAPC features details are shown in the example message format 50 shown in FIG. 5). The number of MAPC Feature Information fields 54 is variable and depends on the set of implemented MAPC functionalities. The length of each MAPC Feature Information field 54 may also be variable, depending, for example, on the specific information required by each feature.

Each instance of MAPC feature information 54 may include one or more of the following:
o Band description: To indicate in which band(s) the feature is supported/enabled.
o Coordination limitations: This field is used to indicate potential limitations on establishing/running MAPC groups for the specific feature (e.g., maximum MAPC group size).
∘ Coordination time limitations: This field is used to indicate potential time limitations and/or time windows for the enablement of the coordinated feature.
∘ Supported security: Security methods supported and security requirements for the coordinated feature may be indicated. Certain coordinated features may require the establishment of security measures to protect sensitive data (e.g., STA identifiers, STA locations, etc.).
∘ Feature supported capabilities: This field is used to indicate specific capabilities of the corresponding MAPC feature (e.g., MAPC group leader, thresholds, transmission capabilities, number of antennas, etc.).

Of course, some of the parameters of the MAPC Parameter Set 50 may be omitted in some example embodiments and some further parameters may be included in some example embodiments.

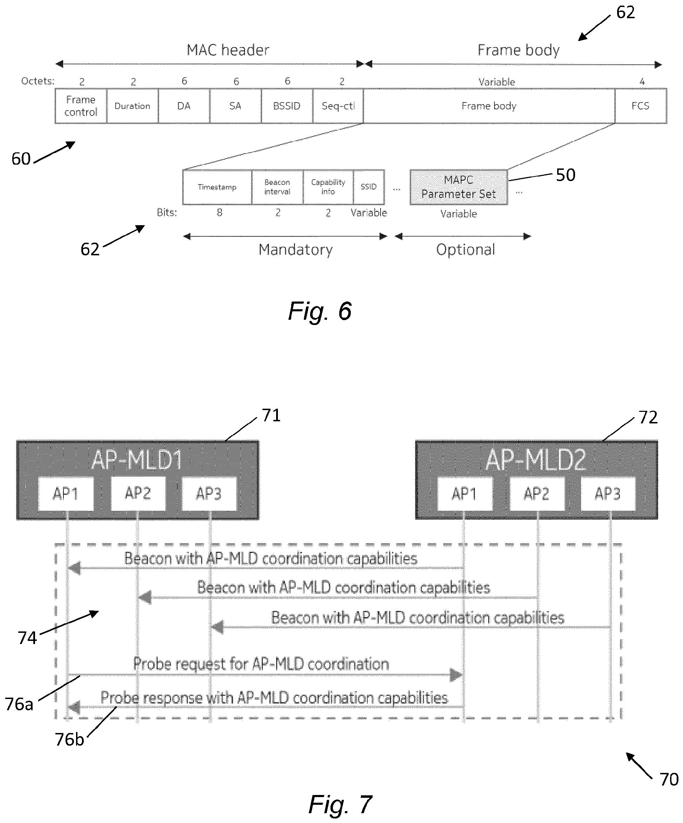

FIG. 6 is a block diagram showing a message format, indicated generally by the reference numeral 60, in accordance with an example embodiment. The message format 60 includes the MAPC parameter set 50 described above. The message format 60 may, for example, be a beacon frame.

The message format 60 comprises a MAC header and a frame body 62. As shown in FIG. 6, the MAPC parameter set 50 is provided in an optional part of the frame body 62.

FIG. 7 is message flow diagram, indicated generally by the reference numeral 70, in accordance with an example embodiment.

The message flow diagram 70 shows message transferred between a first AP-MLD 71 and a second AP-MLD 72 of a wireless communication network, such as a Wi-Fi network. The first AP-MLD 71 includes three Access Points (AP1, AP2, AP3) and the second AP-MLD 72 includes three Access Points (AP1, AP2, AP3). It should be noted that each AP-MLD could include any number of Access Points (and they could have different numbers of Access Points). The various Access Points may, for example, operate in different frequency bands. Note that, for MAPC signalling, each pair of Access Points (e.g., AP1 from AP-MLD1 and AP2 from AP-MLD2) may operate in the same frequency band and channel).

The sequence 70 provides an example implementation of the message 44 of the messages sequence 40 in which MAPC parameter set data is sent from a second node (an AP of the second AP-MLD 72) to a first node (an AP of the first AP-MLD 71). As discussed above with reference to FIG. 5, the MAPC parameter set data comprises capabilities information identifying one or more MAPC features supported by the respective other node and details of supported functionality for each identified supported MAPC feature.

Two example mechanisms are shown in the message sequence 70 for transferring MAPC parameter set data. A first mechanism includes one or more beacon frames 74 (such as the message format 60 described above) being sent from the second AP-MLD 72 to the first AP-MLD 71. The second mechanism involves probe request and response frames 76 being sent between the first and second AP-MLDs. Beacon frames 74 and probe request/response frames 76 carry the MAPC Parameter set 50 described above.

The use of beacon frames 74 (such as the message format 60) may be referred to as an implicit mode. The use of probe request/response frames may be referred to as an explicit mode. Some example AP-MLDs may be required to be able to support both methods. Such AP-MLDs may, for example, include the following functionality:
∘ The ability to read and process beacon frames 74 from other AP-MLDs to discover their MAPC capabilities.
∘ The ability to send Probe Request management frames 76a to other AP-MLDs to request information about their MAPC capabilities.
∘ The ability to read Probe Response management frames 76b from other AP-MLDs to learn their MAPC capabilities.

Thus, exchanging parameter sets in the operation 32 of the method 30 may comprise providing MAPC parameter set data of the respective node by broadcasting said data in the form of a beacon frame and receiving MAPC parameter set data from one or more other nodes in beacon frames broadcast by the respective other node(s).

Alternatively, or in addition, exchanging parameter sets in the operation 32 may comprise a probe request being sent (e.g., broadcast) to a node of the wireless communication network requesting co-ordination information from a node of the wireless communication network and one or more probe response(s) being received from one or more nodes in response to said request, wherein said probe response(s) include MAPC parameter set data for the respective node(s). The probe response(s) may be directed messages (whose destination address is set to the ID of the device sending/broadcasting the probe request).

Similarly, beacon and probe frames may be used to implement messages 44 and 45 of the message sequence 40 described above.

In the message 44, the second node 42 provides MAPC parameter set data for the second node to the first node 41 (and possibly to one or more other nodes of the wireless communication network). The MAPC parameter set data may form part of a beacon frame 74 or a probe response 76b (sent in response to a probe request).

Similarly, in the message 45, the first node 41 provides MAPC parameter set data for the first node to the second node 42 (and possibly to one or more other nodes of the wireless communication network). The MAPC parameter set data may form part of a beacon frame 74 or a probe response 76b (sent in response to a probe request).

The establishment and negotiation of MAPC groups (see step 34 of the method 30) is achieved through direct messages between nodes (e.g., between AP-MLDs). Example messages include authentication and association messages.

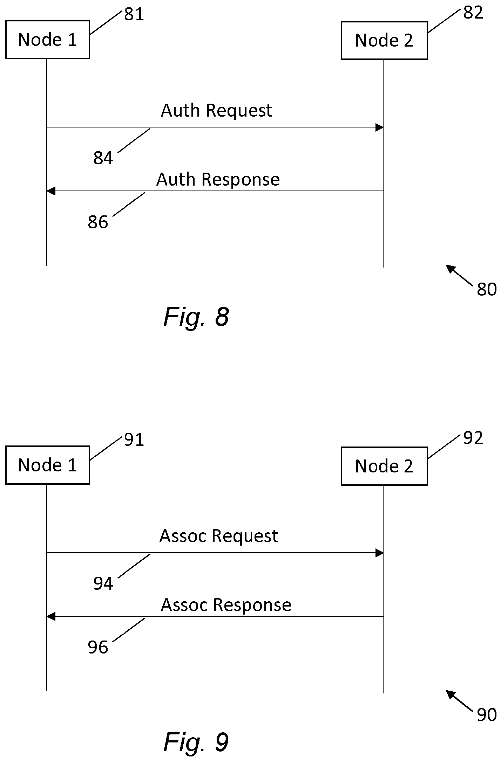

FIG. 8 is message flow diagram, indicated generally by the reference numeral 80, in accordance with an example embodiment. The message flow diagram 80 shows messages transferred between a first node 81 and a second node 82 of a wireless communication network, such as a Wi-Fi network. The first node 81 may, for example, be any of the nodes 12, 21, 41 and 71 described above. The second node 82 may, for example, be any of the nodes 14, 22, 42 and 72 described above.

The message sequence 80 comprises the first node 81 sending an authentication request 84 to the second node 82. An authentication response 86 is provided by the second node to the first node in response to the authentication request 84. As discussed in detail below, the authentication response can be used to establish a trusted setting between at least some nodes of an MAPC group, including the first node. The authentication requests and responses may be implemented using management frames.

The authentication request 84 may include a pre-shared key (or some other authentication information) to be validated by the second node 82. Note that authentication might be mutual (depending on the approach indicated in "MAPC auth. Mode" discussed below). So, in summary, the authentication request, in this case, is not for asking for authentication information, since that is already known from the MAPC parameter set.

As discussed in detail below, the same management frame may be used for both the Authentication Request 84 and the Authentication Response 86, but with different fields.

FIG. 9 is message flow diagram, indicated generally by the reference numeral 90, in accordance with an example embodiment. The message flow diagram 90 shows messages transferred between a first node 91 and a second node 92 of a wireless communication network, such as a Wi-Fi network. The first node 91 may, for example, be any of the nodes 12, 21, 41, 71, and 81 described above. The second node 92 may, for example, be any of the nodes 14, 22, 42, 72 and 82 described above.

The message sequence 90 comprises the first node 91 sending an association request 94 to the second node 92 requesting addition of a new node to an MAPC group. An association response 96 is provided by the second node to the first node in response to the association request 94. The association request may include agreed co-ordination capabilities of the new node. The association response may include the agreed co-ordination capabilities of the new node. The association requests and responses may be implemented using management frames.

The same management frame may be used for both the association request 94 and the association response 96, but with different fields. Indeed, association requests, association responses, authentication request and authentication responses may all use the same management frame, but with different fields.

In some example embodiments, the authentication request 84 and/or the authentication response 86 may be sent via a relay node. Similarly, in some example embodiments, the association request 94 and/or the authentication response 96 may be sent via a relay node.

The authentication and association procedures described above, when applied by nodes (e.g., AP-MLDs) for MAPC group establishment, can be performed in two different manners:
- Pairwise group based, in which nodes (e.g., AP-MLDs) communicate in pairs to negotiate the establishment of an MAPC group. In this case, AP-MLDs may be on equal terms.
- Group-leader-based, in which an identified leader node of an MAPC group handles the onboarding of new AP-MLDs in the group. Thus, authentication and association to join a given MAPC group is done through the MAPC group leader. The address of the MAPC group leader can be advertised during the Announcement/Discovery of AP-MLD coordination capabilities (e.g., as part of an MAPC parameter set 50). A leader node may, for example, be elected arbitrarily, randomly, voluntarily or following any leader-election method, such as voting based election.

In the event that a leader node is provided, non-leader nodes may be able to relay information to the leader node. This might be useful, for example, in the event that the leader node is not reachable by the requesting node (e.g., is out of range).

When messages are relayed between nodes (either in pairwise embodiments or leader-based embodiments), one or more user terminals (e.g., STAs) may be involved in relaying messages.

Some existing methodologies under the 802.11 Wi-Fi standards may be extended to support the establishment and negotiation of MAPC groups as follows:
- Authentication frames and Association Request/Response frames may be required to carry new fields, which are used for the MAPC establishment and negotiation;
- AP-MLDs may be required to be able to read and process the proposed extensions to the authentication frames from other AP-MLDs to establish MAPC groups; and
- AP-MLDs may be required to be able to read and process proposed extension to the association request/response frames from other AP-MLDs to establish MAPC groups.

Authentication may be needed for a specific subset of MAPC features that require a high degree of trust among the participants (e.g., features involving the exchange of sensitive data). For less restrictive collaboration schemes, open authentication can be used instead. Some example embodiments leverage and extend the current standardized authentication frames for MAPC authentication purposes. During authentication, AP-MLDs may establish a trusted setting and exchange keys used later for MAPC communications (used, e.g., for frame encryption).

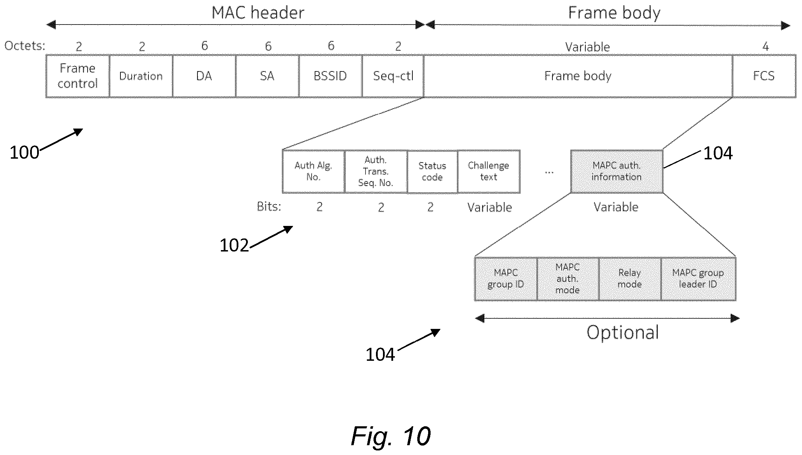

FIG. 10 is a block diagram showing a message format, indicated generally by the reference numeral 100, in accordance with an example embodiment. The message format 100 is an authentication frame (which is an example of a management frame).

The authentication frame 100 can be used as an authentication request (e.g., the request 84 described above) or as an authentication response (e.g., the request 86 described above). This may be dependent on the values of various fields within the authentication frame.

The authentication frame 100 includes a frame body 102. The frame body includes MAPC authentication information 104 that can be used by AP-MLDs for authentication, including some or all of the following fields:
- MAPC group ID: Used when the group is already established and new AP-MLDs desire to join it.
- MAPC authentication mode: To indicate the authentication/association mode, including pairwise authentication, group-leader-based authentication, etc.
- Relay mode: Used to indicate whether the message has been relayed or not (for MAPC signalling coverage extension).
- MAPC group leader ID: Used in the group-leader-based type of authentication.

Once authentication is completed, the AP-MLDs may proceed to formalize the establishment/extension of an MAPC group by exchanging Association Request and Response frames, as discussed below.

It should be noted that instances of the authentication frame 100 (and other management frames described herein) may be exchanged using direct messages or using relayed messages.

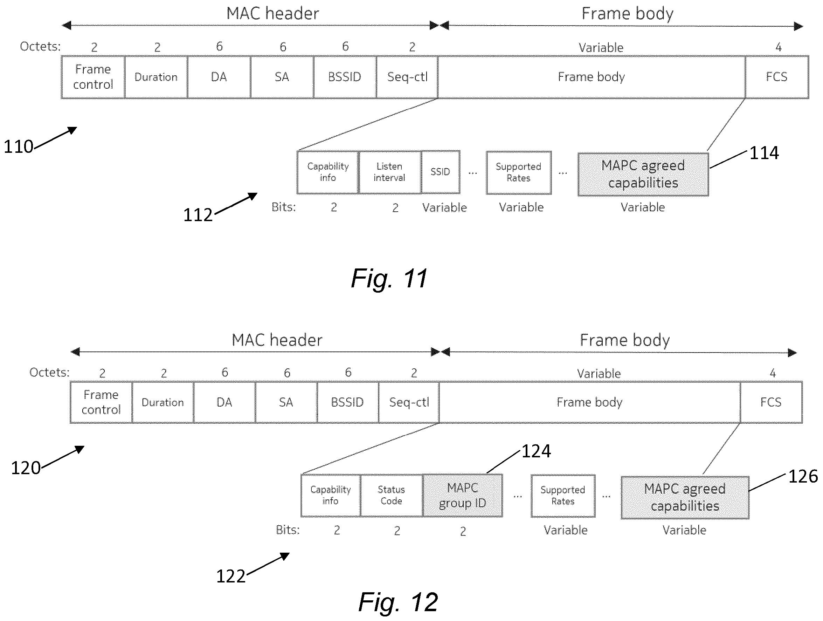

FIG. 11 is a block diagram showing a message format, indicated generally by the reference numeral 110, in accordance with an example embodiment. The message format 110 is an association request (which is an example of a management frame). The association request may be used in the request 94 described above.

The association request 110 includes a MAC header and a frame body 112. The frame body 112 includes MAPC agreed capabilities field 114.

FIG. 12 is a block diagram showing a message format, indicated generally by the reference numeral 120, in accordance with an example embodiment. The message format 120 is an association response (which is an example of a management frame). The association response may be used in the response 96 described above.

The association response 120 includes a MAC header and a frame body 122. The frame body 122 includes a MAPC group ID 124 MAPC agreed capabilities field 126.

The MAPC agreed capabilities field 114 of the association request 110 can be used to inform the recipient of the association request of terms of the coordination, thus indicating specific parameters for the targeted coordination feature (e.g., the maximum number of nulls to be placed in C-BF with null steering, the maximum number of parallel transmissions in C-SR, etc.).

Similarly, the association response frame is adapted to include the final set of agreed capabilities plus the MAPC group ID (instead of the Association ID used when onboarding STAs through the current Association procedure). The MAPC group ID 124 can be used to identify a specific MAPC group and used to indicate the purpose of upcoming coordinated transmissions. Therefore, the MAPC group ID 124 could potentially be used to allow non-AP-MLD devices decoding frames from other AP-MLDs within the same MAPC group.

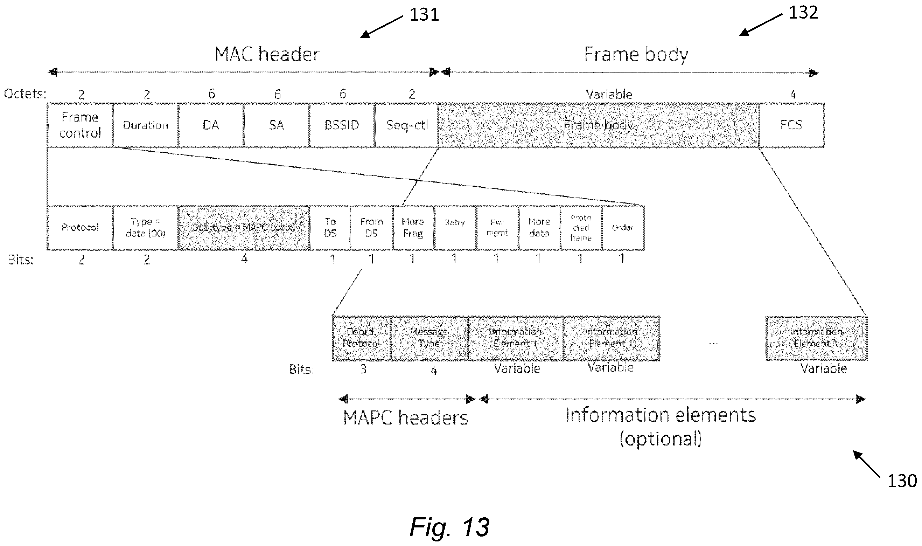

FIG. 13 is a block diagram showing a message format, indicated generally by the reference numeral 130, in accordance with an example embodiment. The message format 130 is an MAPC management frame (which is an example of a management frame). Once a MAPC group is established, the operation of the specific feature (e.g., C-SR, C-BF) is carried out through the use of a management frame such as the MAPC management frame 130.

The MAPC management frame 130 may be used by coordinated devices to request, share, and acknowledge relevant information for fulfilling coordination use cases. The MAPC management frame 130 can therefore be used to implement the operation 36 of the method 30 described above. Thus, such management frames may be exchanged in messages 47 of the message sequence 40 described above.

The MAPC management frame 130 may be generated through appropriate configuration of the "sub type" fields from already existing general management frame structure.

The MAPC management frame 130 comprises a MAC header 131 and a frame body 132.

The MAC header 131 includes a frame control part. Within the frame control part, a new sub type of management frame is indicated. For example, an available code between 0000 and 1111 could be allocated to MAPC purposes.

The frame body 132 includes some or all of the following fields:
- Coordination protocol: Indicates the actual coordination protocol being executed (e.g., C-SR, C-BF, etc.). This forms part of the MAPC header.
- Message type: Indicates the type of control message, which includes the signalling for coordinating a simultaneous transmission, triggering data exchanges (e.g., CSI information from STAs, RU resources used, available/unavailable SPs...), etc. This also forms part of the MAPC header.
- Information elements: Including relevant information to execute the required actions of the particular use case. The content in the information elements may depend on the coordination protocol and the message type. For instance, in C-SR, an AP (sharing) may send a message to trigger another AP (shared) to initiate a simultaneous transmission. In this trigger, the sharing AP might indicate the maximum transmit power to be used by the shared AP during the transmission, as well as other relevant information.

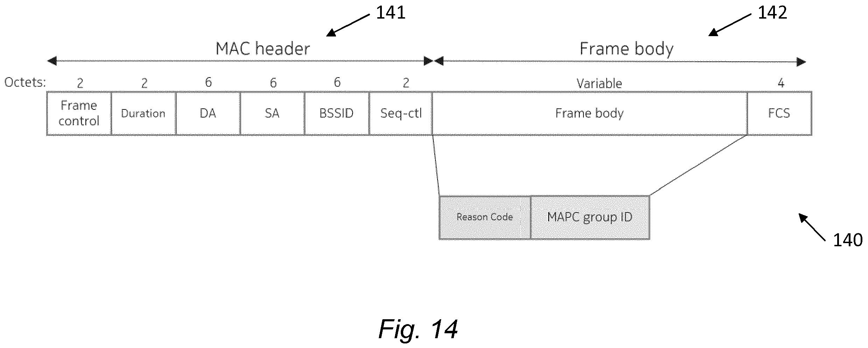

FIG. 14 is a block diagram showing a message format, indicated generally by the reference numeral 140, in accordance with an example embodiment. The message format 140 is a deauthentication/disassociation frame (which is an example of a management frame). The message format 140 may be exchanged in the messages 48 of the message sequence 40.

MAPC changes management and termination processes can be used to modify the terms and conditions of a given ongoing coordination and to terminate the coordination, respectively. For the former, relevant changes can be informed through the MAPC management frame 130 discussed above with reference to FIG. 13.

When it comes to MAPC termination, some example embodiments extend the currently standardized Deauthentication/Disassociation frame. Like for MAPC establishment, the termination can be handled in different manners, depending on the implemented MAPC mode (e.g., pairwise partnership, group-leader-based, etc.).

The deauthentication/disassociation frame 140 comprises a MAC header 141 and a frame body 142. As noted above, management frames, such as the deauthentication/disassociation frame 140, may be exchanged through either direct or relayed messages.

The frame body 142 includes the following fields:
- Reason codes, which are extended to support MAPC-related termination codes (e.g., MAPC inactivity, coordination timeout, disassociation due to poor performance, etc.).
- MAPC group ID, which indicates the group for which the cooperation is terminated.

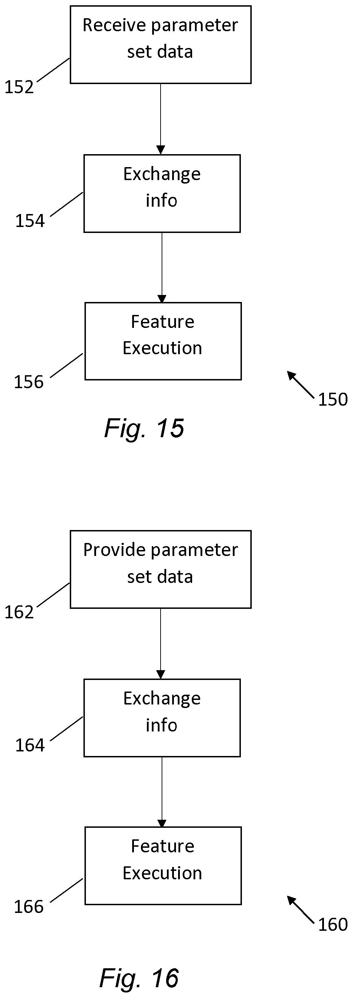

FIG. 15 is a flow chart showing a method, indicated generally by the reference numeral 150, in accordance with an example embodiment. The method 150 may be implemented at a node (e.g., an AP-MLD) of a wireless communication network.

The method 150 starts at operation 152 where an MAPC parameter set (e.g., the MAPC parameter set 50) is received at a first node (e.g., one of the nodes 12, 21, 41, 71, 81 and 91 described above) of a wireless communication network from one or more other nodes (e.g., one of the nodes 14, 22, 42, 72, 82 and 92 described above) of the wireless communication network. As discussed above, each MAPC parameter set data comprises MAPC capabilities information identifying one or more MAPC features supported by the respective other node and details of supported functionality for each identified supported MAPC feature.

At operation 154, information is exchanged between node for establishing or modifying an MAPC group with one or more of said other nodes, said MAPC group usable for defining co-ordination between nodes of the MAPC group. The information may take the form of a management frame.

At operation 156, one or more features defined by one or more management frames received from one or more of said other nodes are executed in accordance with the defined co-ordination.

FIG. 16 is a flow chart showing a method, indicated generally by the reference numeral 160, in accordance with an example embodiment. The method 160 may be implemented at a node (e.g., an AP-MLD) of a wireless communication network.

The method 160 starts at operation 162 where a MAPC parameter set for a first node (e.g., one of the nodes 12, 21, 41, 71, 81 and 91 described above) of a wireless communication network is provided to one or more other nodes (e.g., one of the nodes 14, 22, 42, 72, 82 and 92 described above) of the wireless communication network.

At operation 164, information is exchanged between nodes for establishing or modifying an MAPC group with one or more of said other nodes, said MAPC group usable for defining co-ordination between nodes of the MAPC group, including the first node.

At operation 166, one or more features defined by one or more management frames received from one or more of said other nodes are executed in accordance with the defined co-ordination.

The features of the methods 160 and 170 may be combined, so that the relevant node received parameter set data (operation 152) and provides parameter set data (operation 162. Suitable methods and message sequences are discussed in detail above.

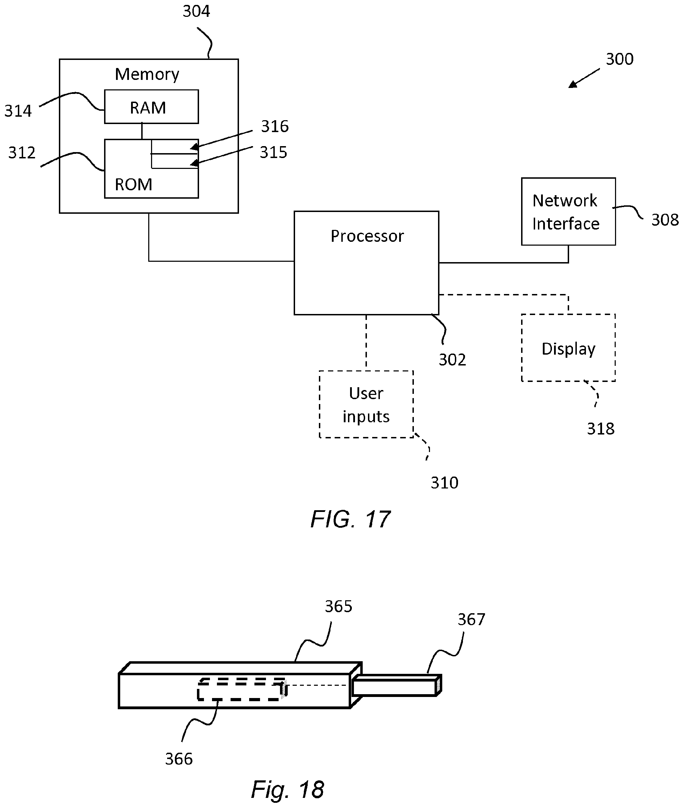

For completeness, FIG. 17 is a schematic diagram of components of one or more of the example embodiments described previously, which hereafter are referred to generically as a processing system 300. The processing system 300 may, for example, be the apparatus referred to in the claims below.

The processing system 300 may have a processor 302, a memory 304 closely coupled to the processor and comprised of a RAM 314 and a ROM 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the method and sequences 30, 40, 70, 80, 90, 15 and 160 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 18 shows a tangible media, in the form of a removable memory unit 365, storing computer-readable code which when run by a computer may perform methods according to example embodiments described above. The removable memory unit 365 may be a memory stick, e.g. a USB memory stick, having internal memory 366 storing the computer-readable code. The internal memory 366 may be accessed by a computer system via a connector 367. Of course, other forms of tangible storage media may be used, as will be readily apparent to those of ordinary skilled in the art. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the methods and message flow diagrams of Figures 3, 4, 7 to 9, 15 and 16 are examples only and that various operations depicted therein may be omitted, reordered and/or combined.

It will be appreciated that the above-described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

The term "means" as used in the description and in the claims may refer to one or more individual elements configured to perform the corresponding recited functionality or functionalities, or it may refer to several elements that perform such functionality or functionalities. Furthermore, several functionalities recited in the claims may be performed by the same individual means or the same combination of means. For example, performing such functionality or functionalities may be caused in an apparatus by a processor that executes instructions stored in a memory of the apparatus.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for receiving, at a first node of a wireless communication network, Multi Access Point Co-ordination, MAPC, parameter set data from one or more other nodes of the wireless communication network, wherein each MAPC parameter set data comprises MAPC capabilities information identifying one or more MAPC features supported by the respective other node and details of supported functionality for each identified supported MAPC feature;
means for providing MAPC parameter set data for the first node to one or more of said other nodes of the wireless communication network;
means for exchanging information for establishing or modifying an MAPC group with one or more of said other nodes, said MAPC group usable for defining co-ordination between nodes of the MAPC group; and
means for executing one or more features defined by one or more management frames received from one or more of said other nodes in accordance with the defined co-ordination.

2. An apparatus as claimed in claim 1, wherein the means for receiving said MAPC parameter set data comprises means for receiving data broadcast by one of more of said nodes.

3. An apparatus as claimed in claim 1 or claim 2, wherein the means for providing said MAPC parameter set data of the first node comprises means for broadcasting said data.

4. An apparatus as claimed in any of claims 1 to 3, further comprising:
means for sending a request to a node of the wireless communication network requesting co-ordination information from a node of the wireless communication network; and
means for receiving a response from said node in response to said request for co-ordination information, wherein said response includes MAPC parameter set data for the respective node.

5. An apparatus as claimed in any of the preceding claims, further comprising:
means for receiving a request from one of said nodes to provide co-ordination information to said node; and
means for sending a response to said request to said node, wherein said response includes the MAPC parameter set data for the first node.

6. An apparatus as claimed in any of the preceding claims, wherein said MAPC parameter set data is received or provided as part of beacon frame or a probe response message exchanged between respective nodes.

7. An apparatus as claimed in any of the preceding claims, wherein said means for exchanging information for establishing or modifying an MAPC group with one or more of said other nodes comprises:
means for sending an authentication request from the first node to one of said other nodes requesting authentication by said other node; and
means for receiving an authentication response from said other node in response to said authentication request, wherein the authentication response is used to establish a trusted setting between at least some of said nodes of the MAPC group, including the first node.

8. An apparatus as claimed in any of the preceding claims, wherein said means for exchanging information for establishing or modifying an MAPC group with one or more of said other nodes comprises:
means for receiving, at the first node, an authentication request from one of said other nodes requesting authentication by said first node; and
means for providing an authentication response in response to said authentication request, wherein said response is used to establish a trusted setting between at least some of said nodes of the MAPC group, including the first node and said other node.

9. An apparatus as claimed in any of the preceding claims, wherein said means for exchanging information for establishing or modifying an MAPC group with one or more of said other nodes comprises:
means for sending an association request to a node of the wireless communication network requesting addition of a new node to the MAPC group, said request including agreed co-ordination capabilities for the new node; and
means for receiving an association response from said node in response to said authentication request, wherein said response includes said agreed capabilities for the new node.

10. An apparatus as claimed in any of the preceding claims, wherein said means for exchanging information for establishing or modifying an MAPC group with one or more of said other nodes comprises:
means for receiving, at the first node, an association request requesting addition of a new node to the MAPC group, said request including agreed co-ordination capabilities for new node; and
means for providing an association response in response to said authentication request, wherein said response includes said agreed capabilities for the new node.

11. An apparatus as claimed in any of the preceding claims, further comprising:
means for exchanging one or more MAPC management frames between at least two nodes of the MAPC group, wherein the or each MAPC management frame comprises MAPC headers and one or more information elements defining features to be executed by the MAPC group.

12. An apparatus as claimed in any one of the preceding claims, wherein the apparatus is said first node.

13. A method comprising:
receiving, at a first node of a wireless communication network, Multi Access Point Co-ordination (MAPC) parameter set data from one or more other nodes of the wireless communication network, wherein each MAPC parameter set data comprises MAPC capabilities information identifying one or more MAPC features supported by the respective other node and details of supported functionality for each identified supported MAPC feature;
exchanging information for establishing or modifying an MAPC group with one or more of said other nodes, said MAPC group usable for defining co-ordination between nodes of the MAPC group; and
executing one or more features defined by one or more management frames received from one or more of said other nodes in accordance with the defined co-ordination.

14. A method comprising:
providing MAPC parameter set data for a first node to one or more of other nodes of the wireless communication network;
exchanging information for establishing or modifying an MAPC group with one or more of said other nodes, said MAPC group usable for defining co-ordination between nodes of the MAPC group, including the first node; and
executing one or more features defined by one or more management frames received from one or more of said other nodes in accordance with the defined co-ordination.

15. A computer program comprising instructions which, when executed by an apparatus, cause the apparatus to perform at least the following:
receive, at a first node of a wireless communication network, Multi Access Point Co-ordination (MAPC) parameter set data from one or more other nodes of the wireless communication network, wherein each MAPC parameter set data comprises MAPC capabilities information identifying one or more MAPC features supported by the respective other node and details of supported functionality for each identified supported MAPC feature;
exchange information for establishing or modifying an MAPC group with one or more of said other nodes, said MAPC group usable for defining co-ordination between nodes of the MAPC group; and
execute one or more features defined by one or more management frames received from one or more of said other nodes in accordance with the defined co-ordination.
